# EUROPEAN PATENT APPLICATION

(11) **EP 3 290 468 A1**
(43) Date of publication of application: **07.03.2018**
(21) Application number: 17190296.8
(22) Date of filing: 16.05.2011
(51) Int. Cl.: C08K 5/3477, C08K 5/5357, C08K 3/22, A47G 27/02, C08L 67/02, D01F 1/04, D01F 6/62, D06N 7/00

(54) **FLAME RETARDANT POLY(TRIMETHYLENE) TEREPHTHALATE COMPOSITIONS AND ARTICLES MADE THEREFROM**

(30) Priority: 17.06.2010 US 355770 P; 30.12.2010 US 201061428287 P
(62) Divisional of application: 11796126.8
(71) Applicant: E. I. du Pont de Nemours and Company, Wilmington, DE 19805 (US)
(72) Inventor: MESSMORE, Benjamin Weaver, Wilmington, DE Delaware 19806 (US); ROLLIN JR, Paul Ellis, Porter, TX Texas 77365 (US); SAMANT, Kalika Ranjan, Hockessin, DE Delaware 19707 (US); CHANG, Jing-Chung, Garnet Valley, PA Pennsylvania 19060 (US)
(74) Representative: Towler, Philip Dean

(57) **Abstract**

Poly(trimethylene terephthalate) compositions, and articles made therefrom, having improved flame retardancy are provided. The compositions can be used to make carpets that are suitable for installation where flame retardancy is desired.

## Description

### FIELD OF THE INVENTION

The present invention relates to poly(trimethylene terephthalate) compositions having improved flame retardancy and to articles made from the compositions.

### BACKGROUND

Poly(trimethylene terephthalate) (PTT) is potentially useful in a variety of applications that require flame retardancy. However, a need remains for improved flame retardancy in PTT. Specifically, it is desirable to provide improved radiant panel performance of PTT in carpet such that a class 1 carpet tile, (> 0.45 Watts/cm2) as known in the art, can be obtained.

### SUMMARY OF THE INVENTION

One aspect of the present invention is a poly(trimethylene terephthalate)-based composition comprising: (a) from about 75 to about 99.9 weight percent of a resin component, based on the total composition weight, wherein the resin component comprises at least about 70 weight percent of a poly(trimethylene terephthalate), based on the weight of the resin component; and (b) from about 0.1 to about 25 weight percent of an additive package, based on the total composition weight, wherein the additive package comprises from about 0.1 to about 15 weight percent of a melamine cyanurate, melamine pyrophosphate, a zinc salt of diethyl phosphinic acid, or blends thereof, based on the total composition weight.

Another aspect of the present invention is a carpet comprising face fibers and a precoat, wherein the face fibers are made from a poly(trimethylene terephthalate)-based composition comprising: (a) from about 75 to about 99.9 weight percent of a resin component, based on the total composition weight, wherein the resin component comprises at least about 70 weight percent of a poly(trimethylene terephthalate), based on the weight of the resin component; and (b) from about 0.1 to about 25 weight percent of an additive package, based on the total composition weight, wherein the additive package comprises from about 0.1 to about 15 weight percent of a melamine cyanurate, melamine pyrophosphate, a zinc salt of diethyl phosphinic acid, or blends thereof, based on the total composition weight, and the precoat contains a flame retardant additive selected from aluminum trihydrate (ATH) and magnesium hydroxide.

### BRIEF DESCRIPTION OF THE DRAWINGS

Figure 1 shows a scatterplot of critical radiant flux vs. fiber face weight for carpet tiles made using poly(trimethylene terephthalate)-based compositions disclosed herein. Fitted line plots show the impact of ATH at various loadings in the precoat.in the absence of any flame retardant in the fiber.
Figure 2 shows a scatterplot of critical radiant flux vs. fiber face weight for carpet tiles made using poly(trimethylene terephthalate)-based compositions disclosed herein. Fitted line plots show the impact of flame retardant additives in the fiber as well as ATH in the precoat.
Figure 3 shows a scatterplot of critical radiant flux vs. fiber face weight for carpet tiles made using poly(trimethylene terephthalate)-based compositions disclosed herein. Fitted line plots show the impact of flame retardant additives in the fiber as well as ATH in the precoat.

### DETAILED DESCRIPTION

The compositions disclosed herein contain a resin component, comprising PTT and optionally one or more other polymers, and one or more flame retarding compounds selected from: melamine phosphates, melamine cyanurates and diethyl phosphinic acid zinc salts. Other polymers that can be in the resin component, include polyethylene terephthalate, polybutylene terephthalate, nylon, polypropylene and blends thereof. Thus, the term "PTT-based composition", as used herein, is intended to encompass compositions wherein the resin component contains one or more other polymers in addition to PTT. The amount of other polymer in the resin component, based on the total weight of the resin component, can vary and can be, for example, 5, 10, 15, 20, or 25 weight percent, or greater. In some preferred embodiments wherein one or more other polymer is present in the resin component with the PTT, the resin component contains from 75 to 99 weight percent of PTT and 1 to 25 weight percent of the other polymer(s), based on the total weight of the resin component.

In some embodiments, the resin component comprises a poly poly(trimethylene terephthalate) made from 1,3-propanediol that is biologically derived.

It has been surprisingly found that carpets comprising face fibers made from the poly(trimethylene terephthalate)-based compositions and a precoat, wherein the precoat contains a flame retardant additive selected from aluminum trihydrate and magnesium hydroxide, unexpectedly high and consistent performance on flame retardancy tests can be obtained.

In some embodiments the additive package contained in the resin component contains, in addition to the specified flame retardant, one or more additives such as delusterants (such as TiO₂, zinc sulfates or zinc oxide), a dye or pigment. The additive package can further contain one or more additives such as antioxidants, residual catalyst, colorants (such as dyes), stabilizers, fillers (such as calcium carbonate), antimicrobials agents, antistatic agents, optical brighteners, extenders, processing aids, and/or other functional additives, commonly referred to as "chip additives".

TiO₂ and other compounds such as zinc sulfide or zinc oxide, which can function as pigments and/or delusterants, can be used in amounts that are commonly used in the art for making PTT compositions. For example, the total amount of pigments/delusterants can be about 5 weight percent or more, based on the total weight of the PTT-based composition, for making fibers, with relatively larger amounts typically being used for other applications. Examples of materials that can be used as pigments and/or delusterants include TiO₂, ZnO, and zinc sulfates. In some embodiments, TiO₂ is preferred. When used in polymer for fibers and film, TiO₂ is added in an amount of preferably at least about 0.01 weight percent, and preferably up to 3 weight percent more preferably up to about 2 weight percent (based on total composition weight).

The term "pigment" is used herein in reference to those substances commonly referred to as pigments in the art. Pigments are substances usually in the form of a dry powder, that impart color to a polymer or article made from the polymer (e.g., chip or fiber). Pigments can be inorganic or organic and can be natural or synthetic. Generally, pigments are inert (i.e., electronically neutral and do not react with the polymer) and are substantially insoluble in the medium to which they are added, such as a poly(trimethylene terephthalate) composition. However, pigments can also be soluble or partially soluble in some materials.

Preferably the resin components, the flame retardant(s) and any other additive(s) are melt blended. Preferably, the resin components and additive(s), including flame retardant, are mixed and heated at a temperature sufficient to form a melt blend composition. The compositions can be spun into fibers or formed into other shaped articles, preferably in a continuous manner.

The resin components and additives can be formed into a blended composition in a variety of different ways known to those skilled in the art. For example, they can be (a) heated and mixed simultaneously, (b) pre-mixed in a separate apparatus before heating, or (c) heated then mixed. The mixing, heating, and forming can be carried out by conventional equipment designed for that purpose such as, for example extruders and Banbury® mixers. The temperature is preferably above the melting points of each of the components but below the lowest decomposition temperature, and can be adjusted for any particular composition of PTT and flame retardant additive. The temperature is typically in the range of about 180 °C to about 270 °C.

The amount of flame retardant compound used in the PTT-based compositions is preferably from 0.1 percent to 15 weight percent, based on total composition weight. More preferably, the amount is from about 0.5 to about 10 weight percent, more preferably from about 1 to about 6 weight percent, still more preferably from about 2 to about 6 weight percent, on total PTT-based composition weight.

Also provided in some embodiments are articles, such as fibers, films and molded parts, comprising the PTT composition, such articles having improved flame retardant properties.

The compositions can be spun into fibers such as bulked continuous filaments (BCF). The BCF can be made into yarns and formed into carpets. Carpets made from the BCF yarns can be made using any method known to those skilled in the art. Typically, a number of yarns are cable twisted together to form a carpet yarn and heat-set in a device such as an autoclave. Alternatively, continuous processes such as dry heat-setting, using, for example, a Suessen heat setting machine, or steam-autoclave heat setting, such as with a Superba® autoclave, can be used to impart structural stability to yarns. Yarns are then tufted into a primary backing, also referred to as the tufting substrate.

BCF can be made using any methods known to those skilled in the art, for example, as disclosed in US Patent No. 7013628, which discloses BCF made from fiber bearing a delta cross section and having a total denier of approximately 1450 denier and a denier per filament of about 20.8. Fiber tenacities range from 1.5 to 2.5 grams/denier and fiber elongations ranging from 55 to 75 percent. The fiber can have a variety of cross-section shapes, depending on the desired properties of the yarn and end product (e.g., carpet) made therefrom. For example, the cross-section can be delta, trilobal, round, or other shapes commonly used in the trade. The total denier of yarns made from the fibers can range from 1000 to 3000 and denier per filament (dpf) can range from 12 to 30.

In some embodiments wherein the PTT-based compositions are used in making fibers and the fibers are used to make carpets, an adhesive material, commonly referred to as the precoat, is used to bind the fibers to the tufting substrate. Common precoats are latex-derived or derived from a hot melt adhesive. The latex-derived precoat or hot melt adhesive precoat contains a binding polymeric resin and may also contain a filler, such as calcium carbonate. In some cases, the precoat can also contain additives such as dispering agents and/or thickener.

Typical polymeric resins used in latex-derived precoats include a polymeric component such as vinyl acetate-ethylene (VAE), styrenebutadiene rubber (SBR), polyvinyl chloride (PVC), polyesters, poyurethanes, and polyolefins, particularly polypropylene. Conventional hot melt adhesives or other non-aqueous adhesives such as ethylene vinyl acetate (EVA), polyolefins and polyethylenes ,which sometimes are used instead of latex for a stronger bond than that provided by latex adhesives, can be utilized as the precoat.

In preferred embodiments, the precoat contains a flame retardant additive such as aluminum trihydrate (ATH) or magnesium hydroxide (Mg(OH)₂). ATH is preferred.

In a latex-derived precoat, the amount of flame retardant additive used in the precoat depends in part on the nature and quantity of the binding polymer or of the polymeric component present,and also on the amount of precoat used, and can vary up to 600 parts per hundred of the polymeric resin in the precoat-(phr). (The polymeric component in the precoat is separate and apart from the resin component of the compositions disclosed herein that comprises PTT). Typically loadings up to 400 phr, such as 1 to 400 phr, are employed. Preferably, loadings from 100 to 400, and more preferably 100 to 300 parts per hundred of flame retardant are employed.

For a precoat based on a hot melt adhesive, the amount of flame retardant additive, such as ATH, used in the precoat is based on the amount of adhesive and fillers , such as calcium carbonate, and can vary up to about 35 weight %, e.g., from 1 to 35 weight %. Preferably, loadings of 1 to 25 weight % of flame retardant are employed. Most preferably, 10-25% of flame retardant is employed,

Some carpet includes a secondary backing in addition to the precoat. The secondary backing adheres to the precoat and is the portion of the carpet structure that contacts the surface being carpeted. In some applications, the carpet has a self-stick and self-release sticky secondary backing; in other applications a cement or glue is used on the secondary backing. Secondary backings derived from polyolefins typically require higher flame retardant loadings in the face fiber and precoat as compared to secondary backings derived from vinyl polymers such as PVC.

It has been found that the amount of flame retardant in the precoat can advantageously be adjusted based on the weight of the face fiber in the carpet, as well as the basis weight and type of the secondary backing if present. "Basis weight" is a term known to those skilled in the art and is used to refer to the weight (in ounces) of carpet, secondary backing, or precoat, per unit area (in square yards). Thus, typically, basis weight for carpet or for precoat is reported in ounces per square yard. Face fiber refers to the fiber content of the carpet including that is visible to the observer. The face fiber is primarily made up of yarns, and those yarns may be styled as cut, loop, cut and loop or any number of styles known to those skilled in the art. Fiber face weight is also typically reported in units such as ounces per square yard. The secondary backing can be a heavy latex, as is the case for carpets commonly referred to as broadloom. Alternatively, the secondary backing can be olefin or vinyl derived as is the case for tile based carpets. The secondary backing can contain multiple layers separated, for example, by fiberglass scrim, and one or more of the multiple layers can contain fillers.

For many applications, it is desired that carpet meet a "Class 1" rating in the ASTM 648E (Radiant Panel) test. However, merely increasing the content of flame retardant in the carpet fibers has been found to produce inconsistent results. Moreover, merely using a higher content of flame retardant in the precoat has limited success because too high a content can adversely affect adhesion properties of the precoat and lead to delamination of the tufted substrate from the secondary backing.

It has been surprisingly found that when a carpet is made using a precoat containing ATH and an additional flame retardant is present in the face fiber of the carpet, specifically when the face fiber of the carpet is made from the PTT-based compositions disclosed herein, an improvement is observed in the resulting flame retardancy, as compared to carpets containing a flame retardant additive in the fibers alone, or in the precoat alone. More particularly, the performance of such carpets in the Radiant Panel test is greater than what is expected based on the use of flame retardant additives in the face fiber alone, or the use of flame retardant additives such as ATH solely in the precoat. In some embodiments, the improvement is such that the radiant panel performance value is greater than the sum of the radiant panel performance values achieved with the flame retardant in the precoat alone and with the flame retardant in the carpet fibers alone. This allows the production of carpet tiles that are rated as Class 1.

In preferred embodiments, the carpet contains 2 weight % or less flame retardant in the fiber, at a carpet basis weight of 28 oz/yd² or less and in some embodiments 24 oz/yd² or less.

### EXAMPLES

### Ingredients

The PTT used in the examples was SORONA® "semi-bright" polymer available from E.I. du Pont de Nemours and Company (Wilmington, DE). The flame retarding compounds used in the examples as set out in Table 1 that follows.

**Table 1**

| Chemical Name | Trade Name | Supplier |
|---|---|---|
| Melamine Pyrophosphate (MPP) | MPP 13-1115 | Hummel Croton |
| Diethyl Phosphinic Acid, Zinc Salt (OP950) | Exolit® OP-950 | Clariant |
| Melamine Cyanurate (MC) | MC-25 | Ciba Chemical |

The approach to determining improvement in radiant panel testing was to produce bulked continuous filaments (BCF) containing the flame retarding additive(s) and to produce carpet samples containing the BCF for testing.

### Compounding

A 25% concentrate of each of the flame retardant additive(s) in PTT was produced. The 25% concentrate, PTT and a color pigment were placed in three separate hoppers. Additive feeders designed to deliver the contents of the three separate hoppers were employed to mix the PTT, flame retardant additive(s) and color pigment at the appropriate weight percent during melt spinning of fibers using a typical process such as those described in US Patent No. 7013628

BCF were twisted at 4.75 twist per inch and Superba® heat-set. Fibers were then tufted into a 3.5 ounces per square yard nonwoven primary substrate known as Colback® form Colbond. Tuft settings were 13^{th} gauge, 0.18 in pile height and the fiber face weight varied as indicated in Table 2.

Latex adhesive used as a precoat was obtained from BizMax Solutions Inc. The precoats were VAE based and contained ATH varying from 0 to 300 phr as appropriate for the weight of fiber. Precoat was applied to carpet samples at a basis weight of approximately 25 oz/yard².

Secondary backing was an extrusion grade thermoplastic polyolefin TKP 882D TPO merge containing 65% by weight, based on the weight of TPO, of calcium carbonate as filler, obtained from the LyondellBasell company. Two extruded layers, each approximately 40 oz/sq yd, with a 2.1 oz/ yard² fiberglass in between, were applied to the precoated primary substrate.

### Radiant Panel Testing

Carpet tile samples were produced and submitted for radiant panel testing according to ASTM 648E. The critical radiant flux (CRF) was determined and the results for samples that did not contain a flame retardant additive in the fiber are captured in Table 2 below.

**Table 2**

| Example Number | Flame Retardant | Weight of flame retardant (%) | Fiber Face Weight (oz/yd²) | ATH Loading in Precoat (phr) | CRF Avg (watts/cm²) |
|---|---|---|---|---|---|
| Comparative Ex. 1 | None | 0 | 20 | 0 | 0.38 |
| Comparative Ex. 2 | None | 0 | 28 | 0 | 0.26 |
| Comparative Ex. 3 | None | 0 | 36 | 0 | 0.27 |
| Comparative Ex. 4 | None | 0 | 24 | 100 | 0.38 |
| Comparative Ex. 5 | None | 0 | 34 | 100 | 0.29 |
| Comparative Ex. 6 | None | 0 | 20 | 200 | 0.48 |
| Comparative Ex. 7 | None | 0 | 24 | 200 | 0.52 |
| Comparative Ex. 8 | None | 0 | 34 | 200 | 033 |
| Comparative Ex. 9 | None | 0 | 34 | 200 | 0.31 |
| Comparative Ex. 10 | None | 0 | 28 | 200 | 0.30 |
| Comparative Ex. 11 | None | 0 | 36 | 200 | 0.29 |
| Comparative Ex. 12 | None | 0 | 24 | 300 | 0.54 |
| Comparative Ex. 13 | None | 0 | 25 | 300 | 0.56 |
| Comparative Ex. 14 | None | 0 | 34 | 300 | 0.41 |

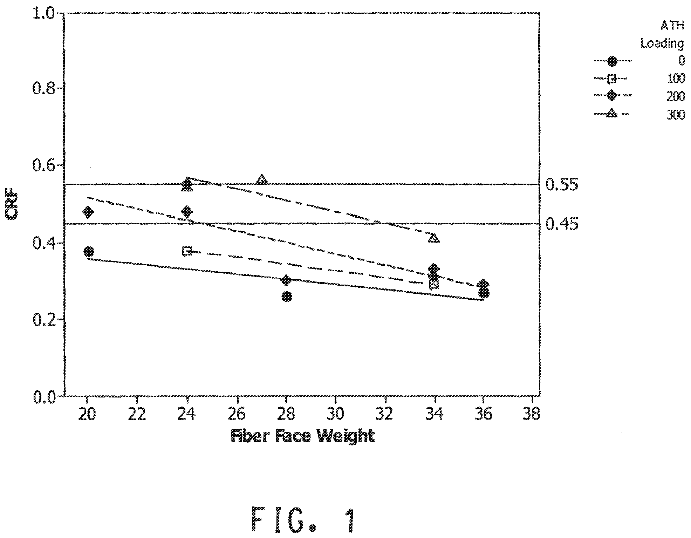

Radiant panel results are plotted in Figure 1. Reference lines are incorporated in the Figures at 0.45 and 0.55 watts/cm². The former is the average value expected for a Class 1 rating in the radiant panel test. The latter, however, is the average value used in practice, given the variability of the test, that also provides a margin of comfort for a carpet tile producer. The slope of the regression lines indicates that carpets perform better in the radiant panel test at lower fiber face weight. Increasing the loading of ATH in the precoat also improves the performance of the tile in the radiant panel test.

The CRF results for tiles containing flame retardant additive OP950 in the fiber at various loadings along with precoats containing various loadings of ATH are shown in Table 3.

**Table 3**

| Example Number | Flame Retardant | Weight % of flame retardant | Fiber Face Weight (oz/yd²) | ATH Loading in Precoat (phr) | CRF Avg (watts/cm²) |
|---|---|---|---|---|---|
| Ex. 1 | OP950 | 1 | 20 | 0 | 0.36 |
| Ex. 2 | OP950 | 1 | 28 | 0 | 0.42 |
| Ex. 3 | OP950 | 1 | 36 | 0 | 0.27 |
| Ex. 4 | OP950 | 1 | 20 | 200 | 0.47 |
| Ex. 5 | OP950 | 1 | 28 | 200 | 0.27 |
| Ex. 6 | OP950 | 1 | 36 | 200 | 0.26 |
| Ex. 7 | OP950 | 2 | 20 | 0 | 0.44 |
| Ex. 8 | OP950 | 2 | 28 | 0 | 0.40 |
| Ex. 9 | OP950 | 2 | 36 | 0 | 0.32 |
| Ex. 10 | OP950 | 2 | 20 | 100 | 0.47 |
| Ex. 11 | OP950 | 2 | 28 | 100 | 0.41 |
| Ex. 12 | OP950 | 2 | 36 | 100 | 0.31 |
| Ex. 13 | OP950 | 2 | 20 | 200 | 0.63 |
| Ex. 14 | OP950 | 2 | 28 | 200 | 0.43 |
| EX. 15 | OP950 | 2 | 36 | 200 | 0.27 |
| Ex. 16 | OP950 | 2 | 25 | 300 | 0.69 |
| Ex. 17 | OP950 | 3 | 25 | 300 | 0.74 |

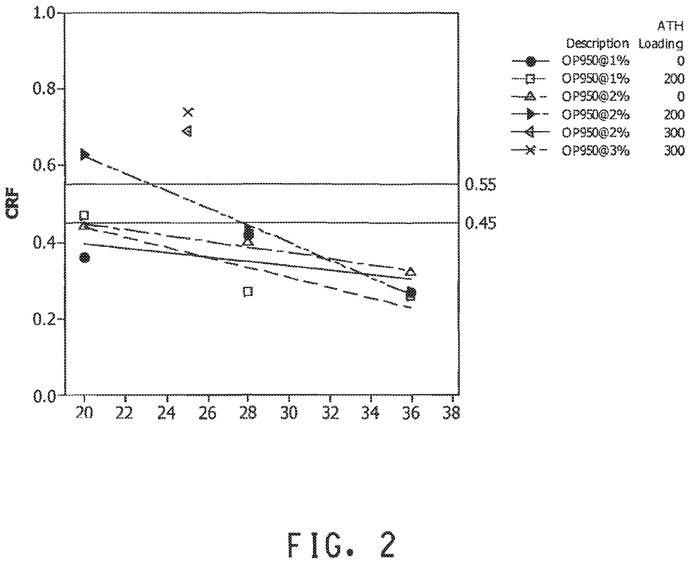

Figure 2 shows the impact of both OP950 in the carpet face fiber and ATH in the carpet precoat on the performance of the carpet in the Radiant Panel test. The data in Table 1 and 2 above illustrate the advantageous effect of including ATH in precoat and OP-950 in the face fiber of a carpet sample. Consider Comparative Example 1, the CRF is 0.38 watts/cm² where there is no FR additive in the fiber or ATH in the precoat. Adding 200 phr of ATH to the precoat, found in Comparative Example 6, raises the CRF from 0.38 to 0.48 watts/cm², an increase of 0.1 CRF units. Referring to Example 7, adding just 2% of OP950 to the face fiber raises the CRF to 0.44 watts/cm², an increase of 0.06 CRF units over that observed for Comparative Example 1.

If the effect of OP950 in the face fiber and ATH in the precoat were simply additive, the expected CRF for a tile containing both would be 0.38 watts/cm² + 0.1watts/cm² + 0.06 watts/cm² or 0.54 watts/cm². However, unexpectedly, the observed radiant flux is found in Example 13 to be 0.63 watts/cm².

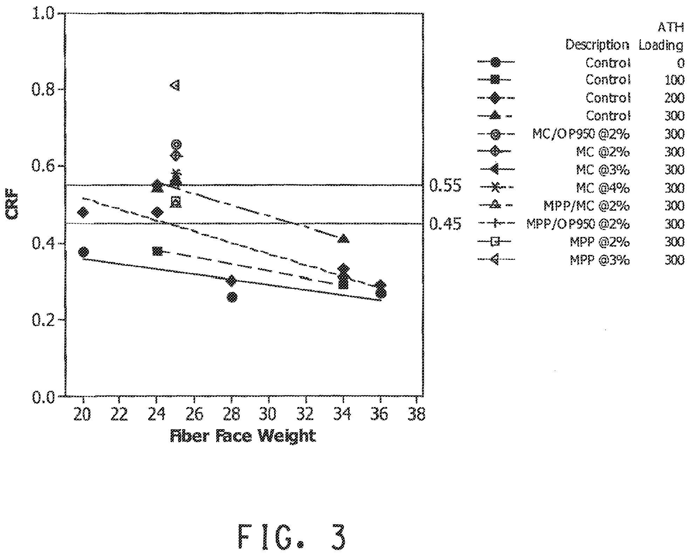

As can be seen in Table 4, improved performance is also seen in the Radiant Panel Test where retardants, such as MPP and MC are used along with ATH in the precoat. In addition, blends of MPP and MC (Example 23), MPP and OP950 (Example 24), and MC and OP950 (Example 25) also greatly improve the radiant panel performance of a carpet sample when ATH is used in the precoat. Relative weight percents of each blend component are presented parenthetically in the chart as well. Figure 3 shows various flame retardant additives and their CRF results.

**Table 4**

| Example Number | Flame Retardant (w%/w%) | Weight % of flame retardant | Fiber Face Weight (oz/yd²) | ATH Loading in Precoat (phr) | CRF Avg (watts/cm²) |
|---|---|---|---|---|---|
| Ex. 18 | MPP | 2 | 25 | 300 | 0.51 |
| Ex. 19 | MPP | 3 | 25 | 300 | 0.81 |
| Ex. 20 | MC | 2 | 25 | 300 | 0.63 |
| Ex. 21 | MC | 3 | 25 | 300 | 0.56 |
| Ex. 22 | MC | 4 | 25 | 300 | 0.58 |
| Ex. 23 | MPP/MC (56/44) | 2 | 25 | 300 | 0.50 |
| Ex. 24 | MPP/OP950 (27/73) | 2 | 25 | 300 | 0.56 |
| Ex. 25 | MC/OP950 (38/62) | 2 | 25 | 300 | 0.66 |

Certain preferred embodiments of the present invention are as follows:
1. A poly(trimethylene terephthalate)-based composition comprising: (a) from about 75 to about 99.9 weight percent of a resin component, based on the total composition weight, wherein the resin component comprises at least about 70 weight percent of a poly(trimethylene terephthalate), based on the weight of the resin component; and (b) from about 0.1 to about 25 weight percent of an additive package, based on the total composition weight, wherein the additive package comprises from about 0.1 to about 15 weight percent of a melamine cyanurate, melamine pyrophosphate, a zinc salt of diethyl phosphinic acid, or blends thereof, based on the total composition weight.
2. The poly(trimethylene terephthalate)-based composition of embodiment 1, wherein the melamine cyanurate is a non-halogenated melamine cyanurate.
3. The poly(trimethylene terephthalate)-based composition of embodiment 1, wherein the melamine cyanurate and melamine pyrophosphate are granular with an average particle size of less than about 10 micrometers.
4. The poly(trimethylene terephthalate)-based composition of embodiment 1, wherein the additive package comprises from about 0.5 to about 10 weight percent of a melamine cyanurate, melamine pyrophosphate, zinc salt of diethyl phosphinic acid, or blends thereof, based on total composition weight.
5. The poly(trimethylene terephthalate)-based composition of embodiment 1, wherein the additive package comprises from about 1 to about 6 weight percent of a melamine cyanurate, melamine pyrophosphate, zinc salt of diethyl phosphinic acid, or blends thereof, based on total composition weight.
6. The poly(trimethylene terephthalate)-based composition of embodiment 1, wherein the poly(trimethylene terephthalate) is made by polycondensation of terephthalic acid or acid equivalent and 1,3-propanediol.
7. The poly(trimethylene terephthalate)-based composition of embodiment 6, wherein the 1,3-propane is a biologically-derived 1,3-propanediol.
8. The poly(trimethylene terephthalate)-based composition of embodiment 1, wherein the poly(trimethylene terephthalate) is a poly(trimethylene terephthalate) homopolymer.
9. The poly(trimethylene terephthalate)-based composition of embodiment 1, wherein the resin component comprises a second polymer.
10. The poly(trimethylene terephthalate)-based composition of embodiment 9, wherein the second polymer is selected from the group consisting of: polyethylene terephthalate, polybutylene terephthalate and nylon.
11. The poly(trimethylene terephthalate)-based composition of embodiment 1, wherein the additive package comprises TiO₂.
12. A process for preparing the poly(trimethylene terephthalate)-based composition of embodiment 1, comprising: (a) providing the melamine cyanurate, melamine pyrophosphate, zinc salt of diethyl phosphinic acid or blends thereof and the poly(trimethylene terephthalate); (b) mixing the poly(trimethylene terephthalate) and the melamine cyanurate, melamine pyrophosphate, zinc salt of diethyl phosphinic acid or blends thereof to form a mixture; and (c) heating and blending the mixture with agitation to form the composition.
13. The process of embodiment 12, wherein step (c) is carried out at a temperature of about 180 °C to about 270 °C.
14. An article made from the poly(trimethylene terephthalate)-based composition of embodiment 1.
15. The article of embodiment 14, that is in the form of a fiber.
16. A carpet made from the fiber of embodiment 15.
17. A carpet comprising face fibers and a precoat, wherein:
   the face fibers are made from the composition of embodiment 1 and the precoat contains a flame retardant additive selected from aluminum trihydrate and magnesium hydroxide.
18. The carpet of embodiment 17, wherein the precoat is latex-derived and contains the flame retardant in a quantity of 400 phr or less, based on the total weight of the resin component in the precoat.
19. The carpet of embodiment 18 wherein the flame retardant is ATH.
20. The carpet of embodiment 17 wherein the precoat comprises a hot melt adhesive and contains the flame retardant in a quantity of 25 weight % or less, based on the total weight of the resin component in the precoat.
21. The carpet of embodiment 17, wherein the precoat is latex-derived and contains the flame retardant aluminum trihydrate in a quantity of 300 phr or less, based on the total weight of resin component in the precoat, and wherein the carpet contains 2 weight % or less zinc salt of diethyl phosphinic acid in the fiber, at a carpet basis weight of 28 oz/yd² or less
22. The carpet of embodiment 21, wherein the carpet exhibits a radiant panel performance value that is greater than the sum of the radiant panel performance values achieved with the flame retardant in the precoat alone and with the flame retardant in the carpet fibers alone.

## Claims

1. A poly(trimethylene terephthalate)-based composition comprising: (a) from 75 to 99.9 weight percent of a resin component, based on the total composition weight, wherein the resin component comprises at least 70 weight percent of a poly(trimethylene terephthalate), based on the weight of the resin component; and (b) from 0.1 to 25 weight percent of an additive package, based on the total composition weight, wherein the additive package comprises from 0.1 to 15 weight percent of melamine pyrophosphate, based on the total composition weight.

2. The poly(trimethylene terephthalate)-based composition of claim 1, wherein the melamine pyrophosphate is granular with an average particle size of less than 10 µm.

3. The poly(trimethylene terephthalate)-based composition of claim 1, wherein the additive package comprises from 0.5 to 10 weight percent of melamine pyrophosphate, based on the total composition weight.

4. The poly(trimethylene terephthalate)-based composition of claim 1, wherein the additive package comprises from 1 to 6 weight percent of melamine pyrophosphate, based on the total composition weight.

5. The poly(trimethylene terephthalate)-based composition of claim 1, wherein the poly(trimethylene terephthalate) is a poly(trimethylene terephthalate) homopolymer.

6. The poly(trimethylene terephthalate)-based composition of claim 1, wherein the resin component comprises a second polymer.

7. The poly(trimethylene terephthalate)-based composition of claim 6, wherein the second polymer is selected from the group consisting of: polyethylene terephthalate, polybutylene terephthalate and nylon.

8. The poly(trimethylene terephthalate)-based composition of claim 1, wherein the additive package comprises TiO₂.

9. A process for preparing the poly(trimethylene terephthalate)-based composition of claim 1, comprising: (a) providing the melamine pyrophosphate and the poly(trimethylene terephthalate); (b) mixing the poly(trimethylene terephthalate) and melamine pyrophosphate to form a mixture; and (c) heating and blending the mixture with agitation to form the composition.

10. The process of claim 9, wherein step (c) is carried out at a temperature of 180 °C to 270 °C.

11. An article made from the poly(trimethylene terephthalate)-based composition of claim 1.

12. The article of claim 11, that is in the form of a fiber.

13. A carpet made from the fiber of claim 12.
